# EUROPEAN PATENT APPLICATION

(11) **EP 4 020 390 A1**
(43) Date of publication of application: **29.06.2022**
(21) Application number: 20216450.5
(22) Date of filing: 22.12.2020
(51) Int. Cl.: G06T 7/30, G06T 7/00

(54) **PERIPHERAL PERFUSION MEASUREMENT**

(71) Applicant: Koninklijke Philips N.V., 5656 AG Eindhoven (NL)
(72) Inventor: KRÖNKE, Sven, 5656 AE Eindhoven (NL); WISSEL, Tobias, 5656 AE Eindhoven (NL); NOTTEN, Marc Godfriedus Marie, 5656 AE Eindhoven (NL); GRASS, Michael, 5656 AE Eindhoven (NL); BRUECK, Heiner Matthias, 5656 AE Eindhoven (NL); BYSTROV, Daniel, 5656 AE Eindhoven (NL); YOUNG, Stewart Matthew, 5656 AE Eindhoven (NL)
(74) Representative: Philips Intellectual Property & Standards

(57) **Abstract**

The present invention relates to peripheral perfusion measurement. In order to provide more detailed peripheral perfusion characteristics for better knowledge about a current situation, a device (10) for peripheral perfusion measurement is provided that comprises an image data input (12), a data processor (14) and an output interface (16). The image data input receives at least one perfusion angiographic 2D X-ray image of a region of interest of a subject's foot and a 3D foot-model comprising spatial perfusion-related parameters. The data processor registers the 3D foot-model with the foot in the at least one perfusion angiographic X-ray image. The registering comprises a pose-estimation of the foot in the 2D X-ray image. The information is mapped between the 2D image and the 3D foot-model based on the pose-estimation. Image processing modification instructions are identified based on the mapped information. Further, the at least one image signal is modified based on the image processing modification instructions. The output interface provides the at least one modified image signal. In a first example, a regional perfusion analysis is provided. In a second example, a normalization of the perfusion signal by the fraction of perfused tissue is provided. In third example, reporting in a 3D model is provided.

## Description

### FIELD OF THE INVENTION

The present invention relates to peripheral perfusion measurement and relates in particular to a device for peripheral perfusion measurement, to a system for peripheral perfusion measurement and to a method for peripheral perfusion measurement.

### BACKGROUND OF THE INVENTION

Treatment of peripheral artery disease may involve checking the perfusion status during an intervention to confirm the impact of the chosen treatment option. One way to check changes in perfusion, for example pre- and post-interventional, is via angiography, i.e. projective X-ray imaging. As an example, perfusion properties of limbs can be efficiently and fast measured via 2D angiographies. Angiographic imaging has the advantage of being readily available in the cathlab as well as providing immediate and high-resolution perfusion information in real-time under moderate radiation doses. The projective nature, however, leads to a loss of depth information in projection direction. Small changes in the 3D pose of for example the foot (with respect to radiation source and detector) therefore entail possibly complex spatial distortions of the anatomy in the 2D image. 3D imaging, e.g. CT(A) or MR(A), in contrast is slow, more expensive and in the case of CT requires higher doses of radiation. Further, 3D images may not be available during the treatment and are sometimes also not acquired before the intervention - at least not for the foot, the target region of perfusion analysis - where perfusion deficits manifest in symptoms like wounds, gangrenes or ulcers. However, it has been shown that the measurement of only cumulative absorption X-ray direction makes a quantitative comparison between different regions in the same digital subtraction angiography (DSA) sequence or between different DSA sequences difficult.

### SUMMARY OF THE INVENTION

There may thus be a need to provide more detailed peripheral perfusion characteristics for better knowledge about a current situation.

The object of the present invention is solved by the subject-matter of the independent claims; further embodiments are incorporated in the dependent claims. It should be noted that the following described aspects of the invention apply also for the device for peripheral perfusion measurement, for the system for peripheral perfusion measurement and for the method for peripheral perfusion measurement.

According to the present invention, a device for peripheral perfusion measurement is provided. The device comprises an image data input, a data processor and an output interface. The image data input is configured to receive at least one perfusion angiographic 2D X-ray image of a region of interest of a subject's foot. The image data input is also configured to receive a 3D foot-model comprising spatial perfusion-related parameters. The data processor is configured to register the 3D foot-model with the foot in the at least one perfusion angiographic X-ray image; the registering comprising a pose-estimation of the foot in the 2D X-ray image. The data processor is configured to map information between the 2D image and the 3D foot-model based on the pose-estimation. The data processor is also configured to identify image processing modification instructions based on the mapped information. The data processor is further configured to modify the at least one image signal based on the image processing modification instructions. The output interface is configured to provide the at least one modified image signal. As an effect, improved image data is provided which can be used for further analysis steps, thus leading to improved analysis results.

According to an example, for the mapping, the data processor is configured to map perfusion regions from the 3D foot-model into the 2D X-ray image and project the perfusion regions in 2D. For the identification of the at least one image processing modification instruction, the data processor is also configured to sum up a perfusion signal in each of the projected perfusion regions, wherein the data processor is configured to adapt the perfusion regions to the estimated pose. Further, for the modification, the data processor is configured to generate a set of time-density curves corresponding to these adapted perfusion regions.

According to an example, for the mapping, the data processor is configured to perform a ray tracing. Further, for the identification of the at least one image processing modification instruction, the data processor is configured to derive a modification factor from the 3D model. Still further, for the modification, the data processor is configured to apply the derived modification factor to the at least one signal of the 2D X-ray image. For the provision of the at least one modified image signal, the data processor is also configured to report the modified image signal in the image or providing quantities derived from the at least one modified image signal.

According to an example, for the mapping, the data processor is configured to perform ray tracing of a patch of at least one pixel of the 2D X-ray image and to map a respective image signal to a perfused region in the 3D model that contributed to the patch in the 2D X-ray image. For the identification of the at least one image processing modification instruction, the data processor is configured to store the perfusion signal of the 2D X-ray image or derived quantities in the 3D model. For the modification, the data processor is configured to generate a reporting via a 3D rendering of the 3D model with the stored perfusion signal.

According to an example, the 3D foot-model is an articulated model of the foot that can be adapted to a given bone constellation of the foot.

According to an example, the perfusion-related parameters comprise perfusion analysis relevant three-dimensional structures comprising at least one of the group of: the skin, underlying parenchyma, bones of the foot, parcellation of the foot into clinically relevant regions, and main vessels of the foot.

According to an example, the data processor is configured to calculate a regional perfusion analysis of a digital subtraction angiography sequence as perfusion analysis, taking distortions of the projective imaging for the given pose into account.

According to an example, a visualization unit is provided comprising a graphical user interface configured to present the results of the data processor via the output interface. In an option the graphical user interface is configured to compare perfusion parameters of different digital subtraction angiography sequences.

According to the present invention, also a system for peripheral perfusion measurement is provided. The system comprises an X-ray imaging device, a display device and a device for peripheral perfusion measurement according to one of the preceding examples. The X-ray imaging device is configured to provide at least one perfusion angiographic X-ray image of a region of interest of a subject's body. The display device is configured to display the at least one modified image signal.

According to the present invention, also a method for peripheral perfusion measurement is provided. The method comprises the following steps:
- receiving at least one perfusion angiographic 2D X-ray image of a region of interest of a subject's foot, and receiving a 3D foot-model comprising spatial perfusion-related parameters;
- registering the 3D foot-model with the foot in the at least one perfusion angiographic X-ray image, wherein the registering comprises a pose-estimation of the foot in the 2D X-ray image;
- mapping information between the 2D image and the 3D foot-model based on the pose-estimation;
- identifying image processing modification instructions based on the mapped information;
- modifying the at least one image signal based on the image processing modification instructions; and
- providing the at least one modified image signal.

According to an example of the method, the mapping comprises mapping perfusion regions from the 3D foot-model into the 2D X-ray image and projecting the perfusion regions in 2D. Further, the identifying of the at least one image processing modification instruction comprises summing up a perfusion signal in each of the projected perfusion regions, wherein the perfusion regions are adapted to the estimated pose. Still further, the modifying comprises generating a set of time-density curves corresponding to these adapted perfusion regions.

According to an example of the method, the mapping comprises ray tracing. Further, the identifying of the at least one image processing modification instruction comprises a derivation of modification factor from the 3D model: The modifying comprises applying the derived modification factor to the at least one signal of the 2D X-ray image. The providing the at least one modified image signal comprises reporting the modified image signal in the image or providing quantities derived from the at least one modified image signal.

According to an embodiment of the method, the mapping comprises ray tracing of a patch of at least one pixel of the 2D X-ray image and mapping a respective image signal to a perfused region in the 3D model that contributed to the patch in the 2D X-ray image. Further, the identified image processing modification instructions comprise storing the perfusion signal of the 2D X-ray image or derived quantities in the 3D model. Still further, the modifying comprises generating a reporting via a 3D rendering of the 3D model with the stored perfusion signal.

According to an embodiment of the method, the 3D foot-model is a deformable 3D foot-model. For the mapping, it is provided the step of detecting a pose of the foot in the at least one X-ray image. For the identifying, it is provided the step of:
determining articulation parameters of the foot based on the detected pose of the foot. For the modifying, it is provided the steps of: adapting the 3D foot-model and the spatial perfusion-related parameters based on the detected pose and based on the determined articulation parameters; and providing the at least one X-ray image and the adapted spatial perfusion-related parameters for further computing perfusion analysis for at least a part of the foot of the subject. For the modifying, it is provided the step of presenting a result of the perfusion analysis as 2D image. As an option, it is provided a further step of performing perfusion analysis for at least a part of the foot of the subject based on the at least one X-ray image and the adapted 3D foot-model. In an option, as an analysis step, it is provided: extracting a time density curve based on adapted spatial perfusion-related parameters.

According to an embodiment of the method, the perfusion-related parameters comprise:
i) perfusion analysis relevant three-dimensional structures comprising at least one of the group of: the skin, underlying parenchyma, bones of the foot, parcellation of the foot into clinically relevant regions, and the main vessels; and/or
ii) a foot perfusion parcellation comprising regions for regional perfusion analysis.

According to an embodiment of the method, the 3D foot-model is a deformable 3D foot-model. For the mapping, it is provided the step of detecting a pose of the foot in the at least one X-ray image. For the identifying, it is provided the step of determining articulation parameters of the foot based on the detected pose of the foot. For the modifying, it is provided the steps of adapting the 3D foot-model and the spatial perfusion-related parameters based on the detected pose and based on the determined articulation parameters; and providing the at least one X-ray image and the adapted spatial perfusion-related parameters for further computing perfusion analysis for at least a part of the foot of the subject.

According to an embodiment of the method, the perfusion analysis comprises a regional perfusion analysis of a digital subtraction angiography (DSA) sequence taking distortions of the projective imaging for the given pose into account.

According to an aspect, a device for peripheral perfusion measurement is provided that comprises an image data input, a data processor and an output interface. The image data input receives at least one perfusion angiographic 2D X-ray image of a region of interest of a subject's foot and a 3D foot-model comprising spatial perfusion-related parameters. The data processor registers the 3D foot-model with the foot in the at least one perfusion angiographic X-ray image. The registering comprises a pose-estimation of the foot in the 2D X-ray image. The information is mapped between the 2D image and the 3D foot-model based on the pose-estimation. Image processing modification instructions are identified based on the mapped information. Further, the at least one image signal is modified based on the image processing modification instructions. The output interface provides the at least one modified image signal. In a first example, a regional perfusion analysis is provided. In a second example, a normalization of the perfusion signal by the fraction of perfused tissue is provided. In a third example, a reporting in a 3D model is provided.

According to an aspect, a normalized signal is provided and assigned to the 2D image pixel for further 2D image processing and presentation.

According to an aspect, a normalized signal is provided and assigned to the 3D model which is then used for further 3D image processing and presentation.

According to an aspect, analysis steps of 2D angiography data are provided for compensating the loss of depth information. At the same time, also pose- and posture-matching of an angiography with an 3D model featuring internal parameters is provided. As an advantage, acquired 3D image of the same patient is not required.

According to an aspect, a mechanism is provided which extracts time-density curves that are comparable within patients, i.e. pre-/post-interventional, and across patients. The time-density curves are normalized by taking the proportion of penetrated parenchyma, and not only the 2D area of the region of interest in a frame, into account. The time-density curves can quantify the extent of comparability between two recorded curves. Further, the time-density curves do not require 3D imaging data of the patient during deployment. The time-density curves also do not require pose ground truth for 2D angiography images during development.

According to an aspect, the loss of depth information is partially compensated by incorporating prior knowledge in form of a general 3D foot-model and estimating the individual pose of this reference model for each angiography sequence. This estimate is parameterized by camera-parameters of the projection as well as model-internal degrees-of-freedom, flexion, eversion/inversion and anatomical variability.

As an effect, the sensitivity of the measurement signal on pose and posture variations is reduced in a certain range.

As a further advantage, reporting local perfusion measurements is provided on angiographies in the 3D model via ray-tracing and material decomposition. For example, a 3D rendering of these results can help a clinician to interpret the local quantitative results and the 3D rendering may be utilized for intra- and inter-patient comparisons. Further, it can also be used for guiding the operator to interactively optimize the patient-detector positioning during a post-intervention fluoroscopy to match best the settings of the corresponding pre-intervention fluoroscopy.

According to an aspect, curves are provided with normalization, such that irrespective of the size and position of the region of interest, a clinician can compare the perfusion measures to what has been observed in the past, i.e. the clinician can interpret these based on experience. Simply said, the contrast density per area in the imaging plane is considering anatomy and pose. Further, the curve extraction enables quantitative intra- and inter-patient comparisons, i.e. the analysis ensures that the curve is computed from the same region in different images.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a device for peripheral perfusion measurement.
Fig. 2 shows an example of a system for peripheral perfusion measurement.
Fig. 3 shows basic steps of an example of a method for peripheral perfusion measurement.
Fig. 3a shows a first further option of the method, providing a regional perfusion analysis.
Fig. 3b shows a second further option of the method, providing a normalization of the perfusion signal by the fraction of perfused tissue.
Fig. 3c shows a third further option of the method, providing reporting in a 3D model.
Fig. 4 shows an illustration of the 3D model in two different flexions and overlayed.
Fig. 5 shows a foot-model, with an optional foot parcellation.
Fig. 6 shows a row of stages for perfusion analysis, with an input X-ray image, a 3D foot-model for registration and overlaid anatomical regions like a parcellation map.
Fig. 7 schematically illustrates a concept of an example for peripheral perfusion measurement with mapping perfusion parameters into the 3D foot-model for decomposing the penetrated material into tissue and bone and normalizing the X-ray image signal.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

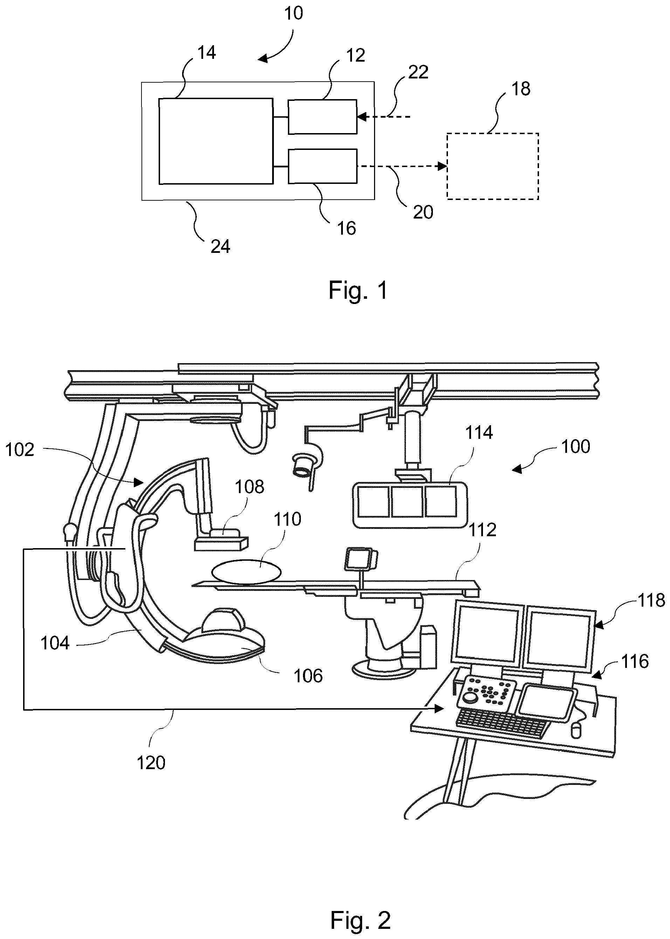

Fig. 1 shows a device 10 for peripheral perfusion measurement. The device 10 comprises an image data input 12, a data processor 14 and an output interface 14. The image data input 12 is configured to receive at least one perfusion angiographic 2D X-ray image of a region of interest of a subject's foot. The image data input 12 is also configured to receive a 3D foot-model comprising spatial perfusion-related parameters. The data processor 14 is configured to register the 3D foot-model with the foot in the at least one perfusion angiographic X-ray image. The registering comprises a pose-estimation of the foot in the 2D X-ray image. The data processor 14 is also configured to map information between the 2D image and the 3D foot-model based on the pose-estimation. The data processor 14 is further configured to identify image processing modification instructions based on the mapped information. The data processor 14 is also configured to modify the at least one image signal based on the image processing modification instructions. The output interface 16 is configured to provide the at least one modified image signal.

The term "pose" relates to the positioning of the imaging arrangement and the object, i.e. the foot, that is being imaged. The term pose thus comprises at least one aspect or criteria of the group of: projection geometry, posture of the foot and further foot-related parameters. The term "pose estimation" thus relates to an estimation, or so-to-speak guessing determination, of projection geometry, posture of the foot and/or further foot-related parameters.

The term "projection geometry" relates to "camera" parameters of the X-ray system, like the geometric setup or positioning of the X-ray source and the X-ray detector in relation to the imaged object, i.e. in relation to the foot. The term "projection geometry" also relates to internal and external camera parameters, i.e. internal and external X-ray imaging paramaters. The projection geometry can thus also be referred to as projection parameters, camera projection geometry, camera setup or projection setup. Simply said, projection geometry relates to how the imaging system is set up.

The term "posture of the foot" relates to the particular arrangement, i.e. position and attitude of the foot. The posture reflects the movement state of the foot and may define which degrees of freedom of movement have been used, such as bending radius of joints and the resulting spatial anatomical arrangement of the foot. The posture of the foot relates to the anatomical articulation as present in the 2D X-ray image. The posture of the foot is also referred to as "posture". Simply said, pose relates to the anatomical "set up" of the foot.

The term "foot-related parameters" relates to further characteristic parameters of the foot, such as the indivual form and shape of the bones.

The projection geometry is sometimes also referred to as camera pose or simply pose. The term "pose-estimation" would then relate to estimating both the "pose" and "posture".

The term "articulation" is used for the arrangement of the foot in the 3D model. The articulation is one of a plurality model-internal parameters, e.g. shape of the bones.

In an example, provided in Fig. 1 as an option, a display 18 is provided for displaying the modified image signal. The data processor 14 may provide the modified image signal as display data to the display, data-connected to the output interface 16. The output of display data and other data is indicated with a first hashed arrow 20. The input of image data, e.g. perfusion angiographic 2D X-ray images or the 3D foot-model, is indicated with a second hashed arrow 22. A frame 24 indicates the option to provide the image data input 12, the data processor 14 and the output interface 16 in an integrated manner, for example in a common housing. In an option, the image data input 12, the data processor 14 and the output interface 16 are provided as separate arrangements. In an option, the 3D foot-model is provided by a data memory of e.g. a data storage (not further shown).

In an example, the display is provided configured to display the results of the analysis and a comparison of perfusion parameters of different digital subtraction angiography sequences.

In another example, a visualization unit (see also Fig. 2) is provided comprising a graphical user interface configured to present the results of the data processor 14 via the output interface 16 and, as an option, to compare perfusion parameters of different digital subtraction angiography sequences.

The device 10 for perfusion angiography can also be referred to as device for perfusion imaging.

The "image data input 12" relates to a supply of image data. The image data input 12 thus provides an interface for inputting image data. The image data input 12 can also be referred to as image data source, image data supply, data input, data supply unit, data input unit or data supply module. The image data input 12 can be connected to a data storage or to an imaging source like an X-ray imaging arrangement.

The "data processor 14" relates to image data processing. The data processor 14 can also be referred to as processor, processing unit or computing module.

The "output interface 16" relates to the provision of the result of the image data processing. The output interface 16 can also be referred to as output unit or output module.

The "image processing modification instructions" relate to provide operating instructions, handling instructions for image data, modification factors, correction calculations and the like.

In an example, the image data input 12 is configured to receive a sequence of perfusion angiographic X-ray images of the region of interest of the subject's body.

Fig. 2 shows an example of a system 100 for peripheral perfusion measurement. The system 100 comprises an X-ray imaging device 102. The X-ray imaging device 102 is configured to provide at least one perfusion angiographic X-ray image of a region of interest of a subject's body. As an example, the X-ray imaging device 102 is shown as a ceiling mounted movable C-arm structure 104 with an X-ray source 106 and an X-ray detector 108 attached to ends of the C-arm. For illustration purposes, also an object 110, i.e. a subject, is shown supported by a patient support 112 for examination, intervention, other treatment or imaging purposes. The system 100 further comprises a display device 114, e.g. in form of a monitor arrangement shown movably suspended from a ceiling. The display device 114 is configured to display the at least one modified image signal. The system 100 also comprises an example 116 of the device for peripheral perfusion angiography according to one of the preceding and following examples. Further, again for illustration purposes, a control console with a monitor 118 and other user interface equipment like a mouse, a keyboard, a control panel and a touchpad is indicated on the right side. The device 116 for peripheral perfusion angiography may be integrated in the control console. A line 120 indicates the data connection (wire or wireless) of the X-ray imaging device 102 and the device 116 for peripheral perfusion angiography.

In an example, the display device 114 is configured to display a result of a perfusion analysis. It is noted that the display device 114 is configured to display the different outputs according to the examples described above and below.

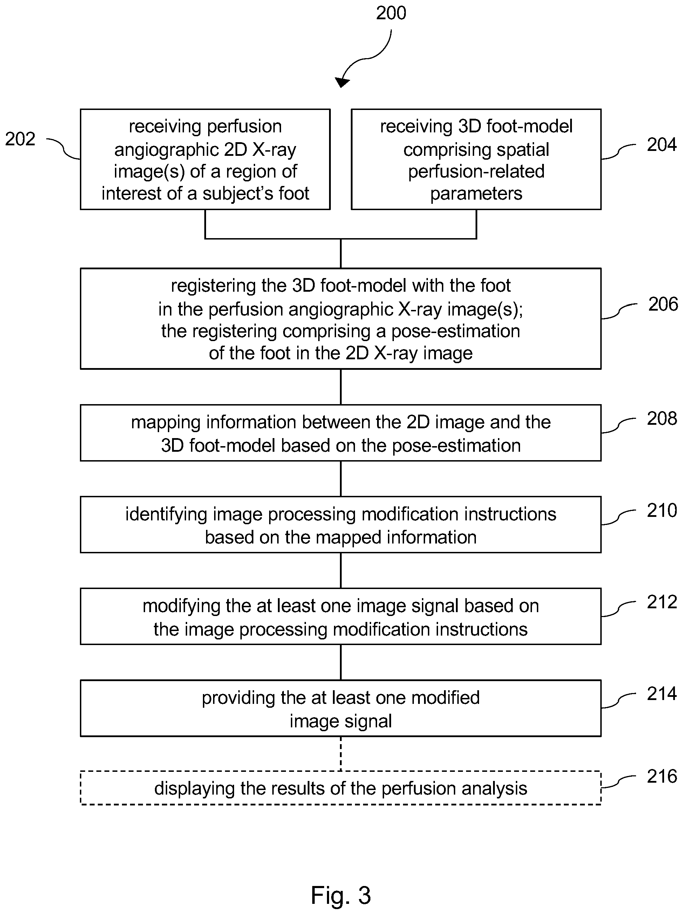

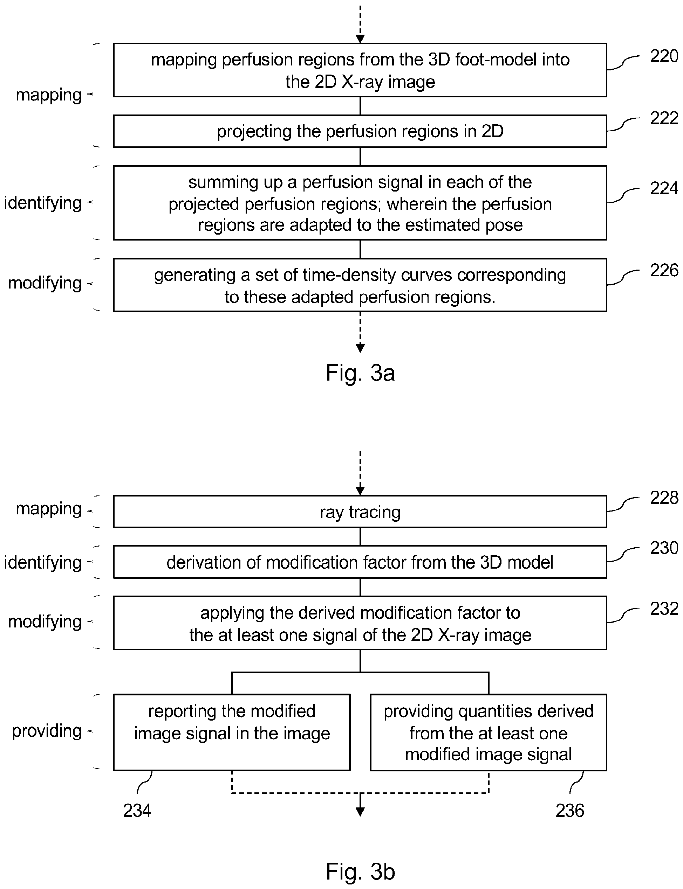

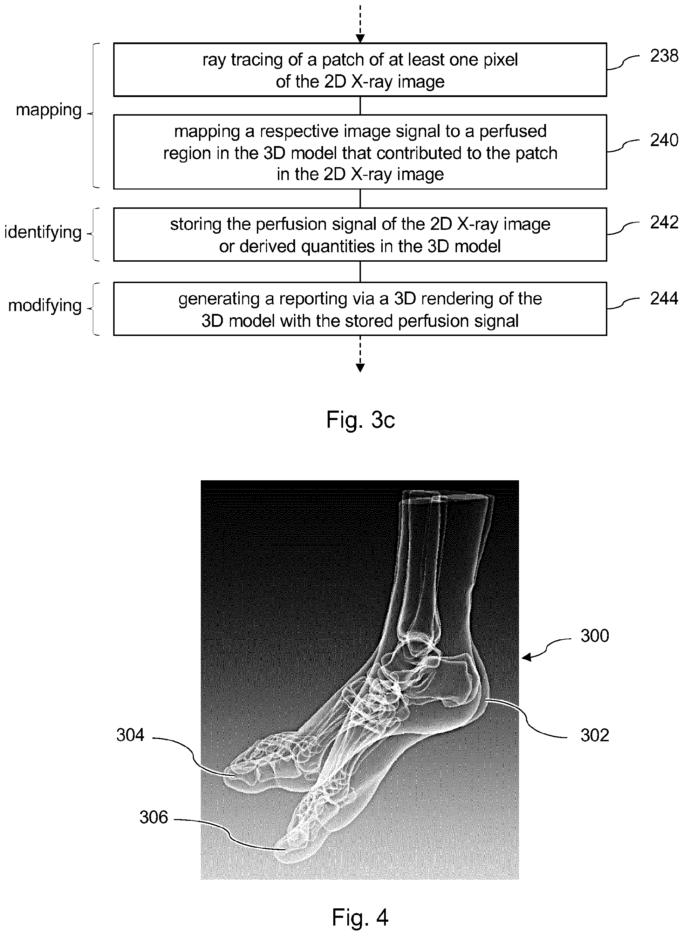

Fig. 3 shows basic steps of an example of a method 200 for peripheral perfusion measurement. The method 200 comprises the following steps:
- In a first step 202, at least one perfusion angiographic 2D X-ray image of a region of interest of a subject's foot is received.
- In a second step 204, a 3D foot-model is received comprising spatial perfusion-related parameters.
- In a third step 206, the 3D foot-model is registered with the foot in the at least one perfusion angiographic X-ray image. The registering comprises a pose-estimation of the foot in the 2D X-ray image.
- In a fourth step 208, information between the 2D image and the 3D foot-model is mapped based on the pose-estimation.
- In a fifth step 210, image processing modification instructions are identified based on the mapped information.
- In a sixth step 212, the at least one image signal is modified based on the image processing modification instructions.
- In a seventh step 214, the at least one modified image signal is provided.
The two registration steps, i.e. the first and second step can be provided simultaneously or in any other order.

The mapping, i.e. the fourth step 208, can comprise mapping 2D into 3D, e.g. signal data from the perfusion angiographic 2D X-ray image(s) into the 3D foot-model.

The mapping, i.e. the fourth step 208, can also comprise mapping 3D into 2D, e.g. parcellation from the 3D foot-model into the perfusion angiographic 2D X-ray image(s).

The mapping, i.e. the fourth step 208, can further comprise mapping 2D into 3D and 3D into 2D.

As an option, indicated with a hashed frame 216, the modified image signal, i.e. the result of the perfusion analysis is displayed.

The method for peripheral perfusion measurement can also be referred to as method for perfusion angiography or method for perfusion imaging. The method provides an adapted perfusion analysis yielding more precise information.

In an example, the registering of the 3D foot-model with the foot in the at least one perfusion angiographic X-ray image comprises estimating the anatomical articulation parameters together with the geometric X-ray imaging parameters.

In an example of the method, a sequence of perfusion angiographic X-ray images of the region of interest of the subject's body are provided.

In an example, the sequence of perfusion angiographic X-ray images of a region of interest of a subject's body is provided as a sequence of perfusion angiographic X-ray images of region of a foot of the subject.

The term "peripheral perfusion" relates to blood supply in peripheral parts of a subject's body, i.e. in vascular structures in peripheral body regions like feet or hands. In case of a foot, the 3D model is a 3D foot-model, in case of a hand, the 3D model is a 3D hand model. The blood supply comprises blood flow, i.e. blood stream, in larger vessels, e.g. arteries and veins. The blood supply also comprises the flow and thus supply in smaller vascular structures, e.g. to provide sufficient blood supply in tissue areas or regions.

The term perfusion relates to the supply of blood to tissue structures.

As an example, the region of interest is a peripheral body portion, for example a distal limb portion, such as a region of a foot, of a hand, of a lower arm portion or of a lower leg portion.

The sequence of perfusion angiographic X-ray images is provided as a sequence of images showing contrast flow in a vasculature structure.

The "perfusion angiographic X-ray images" relate to X-ray images acquired during the application of contrast agent which allows to visualize the vascular structure inside a subject.

The "region of interest of a subject's body" relates to part of the subject's body which is subject to examination or treatment.

The image processing modification instructions can also be referred to as image modification process or image modification procedure. The image processing modification instructions can relate to a modification factor or to a defined task to be performed.

In an example, the result of the pose estimation is used in order to map information from 3D into 2D. In another example, the result of the pose estimation is used in order to map information from 2D into 3D. In a further example, the result of the pose estimation is used in order to map information from 2D into 3D and from 3D into 2D.

For example, the mapping comprises mapping at least one image signal of the 2D X-ray image to the 3D foot-model.

In an example, the result of the pose estimation is used in order to map information from 3D to a signal of the 2D X-ray image. The signal may be an image value. The signal may be a compensation factor or may be a defined perfusion regions.

In an example, the image signal is not mapped into 3D, but the result of the pose estimation is used in order to map information from 3D into 2D.

For example, the identifying of image processing modification instructions is based on the 2D signal mapped to the 3D foot-model. For example, the image processing modification instructions comprises at least one modification factor.

In an example, the pose-estimation comprises a pose measuring.

In the identifying it is provided to identify at least one image processing modification instruction.

In an example, a regional perfusion analysis is provided.

Fig. 3a shows a first further option of the method, providing a regional perfusion analysis. As indicated, the mapping comprises mapping 220 perfusion regions from the 3D foot-model into the 2D X-ray image and projecting 222 the perfusion regions in 2D. The identifying of the image processing modification instructions comprises summing up 224 a perfusion signal in each of the projected perfusion regions, wherein the perfusion regions are adapted to the estimated pose. The modifying comprises generating 226 a set of time-density curves corresponding to these adapted perfusion regions.

As an example, following a pose-estimation, perfusion regions are mapped from 3D model into the image. The perfusion signal is summed up in each of the projected perfusion regions, e.g. that are adapted to the measured pose. As an outcome, a set of time-density curves corresponding to these regions is provided, and e.g. potentially derived quantities such as peak height, width and the like.

In an example, the modifying comprises deriving quantities such as peak height, width and the like for the adapted perfusion regions.

In an example, a normalization of the perfusion signal by the fraction of perfused tissue is provided.

Fig. 3b shows a second further option of the method, providing a normalization of the perfusion signal by the effective fraction of perfused material As indicated, the mapping comprises a ray tracing 228. The identifying of the image processing modification instruction comprises a derivation 230 of modification factor from the 3D model. The modifying comprises applying 232 the derived modification factor to the at least one signal of the 2D X-ray image. The providing the at least one modified image signal comprises reporting 234 the modified image signal in the image or providing 236 quantities derived from the at least one modified image signal.

In an example, following a pose-estimation, ray tracing is provided and derivation modification factor(s) from the 3D model, e.g. without mapping the signal into it. The applying modification factor is applied to signal. The result is reported in an image or in derived quantities, e.g. time-density-curves.

Fig. 3c shows a third further option of the method, providing reporting in a 3D model. As indicated, the mapping comprises a ray tracing 238 of a patch of at least one pixel of the 2D X-ray image and mapping 240 a respective image signal to a perfused region in the 3D model that contributed to the patch in the 2D X-ray image. Further, the identified image processing modification instructions comprise storing 242 the perfusion signal of the 2D X-ray image or derived quantities in the 3D model. Still further, the modifying comprises generating 244 a reporting via a 3D rendering of the 3D model with the stored perfusion signal.

In an example, following a pose-estimation, ray tracing is provided and mapping the signal(s) to a perfused region in the 3D model that contributed to the pixel, or patch of pixels, in the 2D image. The perfusion signal (or derived quantities) is stored in the 3D model. The result is reported via a 3D rendering and/or by comparison to other such reports.

In an example, the derivation of the modification factor from the 3D model is provided without mapping the signal of the 2D X-ray image into the 3D model.

In an example, time-density-curves are provided that are derived from the at least one modified image signal.

In an example, a reporting in the 3D model is provided.

In an example, the modifying also comprises comparing the reporting to other such reports.

In an example, not shown in detail, for the mapping, the data processor 14 is configured to map perfusion regions from the 3D foot-model into the 2D X-ray image and to project the perfusion regions in 2D. For the identification of the at least one image processing modification instruction, the data processor 14 is further configured to sum up a perfusion signal in each of the projected perfusion regions. The data processor 14 is configured to adapt the perfusion regions to the estimated pose. For the modification, the data processor 14 is configured to generate a set of time-density curves corresponding to these adapted perfusion regions.

In an example, not shown in detail, for the mapping, the data processor 14 is configured to perfom a ray tracing. For the identification of the at least one image processing modification instruction, the data processor 14 is also configured to derive a modification factor from the 3D model. For the modification, the data processor 14 is further configured to apply the derived modification factor to the at least one signal of the 2D X-ray image. For the provision of the at least one modified image signal, the data processor 14 is still further configured to report the modified image signal in the image or providing quantities derived from the at least one modified image signal.

In an example, not shown in detail, for the mapping, the data processor 14 is configured to perfom ray tracing of a patch of at least one pixel of the 2D X-ray image and to map a respective image signal to a perfused region in the 3D model that contributed to the patch in the 2D X-ray image. For the identification of the at least one image processing modification instruction, the data processor 14 is configured to store the perfusion signal of the 2D X-ray image or derived quantities in the 3D model. For the modification, the data processor 14 is configured to generate a reporting via a 3D rendering of the 3D model with the stored perfusion signal.

In an example, a device for peripheral perfusion measurement is provided that comprises an image data input, a data processor and an output interface. The image data input is configured to: receive at least one perfusion angiographic 2D X-ray image of a region of interest of a subject's foot; and receive a 3D foot-model comprising spatial perfusion-related parameters. The data processor is configured to: register the 3D foot-model with the foot in the at least one perfusion angiographic X-ray image; map at least one image signal of the 2D X-ray image to the 3D foot-model; identify at least one modification factor based on the 2D signal mapped to the 3D foot-model; and modify the at least one image signal based on the at least one modification factor. The output interface is configured to: provide the at least one modified image signal.

In an example, the 3D foot-model is a deformable 3D foot-model; and the data processor 14 is configured:
- for the mapping, to detect a pose of the foot in the at least one X-ray image;
- for the identification, to determine articulation parameters of the foot based on the detected pose of the foot;
- optionally, to adapt bone shapes of the 3D foot-model, for example to consider anatomical variability among different subjects; and
- for the modification, to adapt the 3D foot-model and the spatial perfusion-related parameters based on the detected pose and based on the determined articulation parameters; and to provide the at least one X-ray image and the adapted spatial perfusion-related parameters for further computing perfusion analysis for at least a part of the foot of the subject.

As an option, the data processor 14 is configured to perform perfusion analysis for at least a part of the foot of the subject based on the at least one X-ray image and the adapted 3D foot-model.

As a further option, for analysis, the data processor 14 is configured to extract a time density curve based on adapted spatial perfusion-related parameters.

In an example, not shown in detail, the 3D foot-model is an articulated model of the foot that can be adapted to a given bone constellation of the foot.

The term "articulated model" refers a model that shows similar degrees for freedom of movement as a respective anatomical structure of a foot. The model so-to-speak mimics the possibilities of a foot to move and reach different poses.

In an example, not shown in detail, the perfusion-related parameters comprise perfusion analysis relevant three-dimensional structures comprising at least one of the group of: the skin, underlying parenchyma, bones of the foot, parcellation of the foot into clinically relevant regions, and the main vessels.

In an example, a foot perfusion parcellation is provided, comprising regions for regional perfusion analysis.

In an example, not shown in detail, the data processor 14 is configured to calculate a regional perfusion analysis of a digital subtraction angiography sequence as perfusion analysis, taking distortions of the projective imaging for the given pose into account.

The term digital subtraction angiography (DSA) refers to contrast injected images from which a non-contrast-injected background is subtracted.

In an example of the device, the data processor 14 is configured to report local perfusion parameters extracted from a digital subtraction angiography sequence in the 3D foot-model, as perfusion analysis.

In an example, not shown in detail, the data processor 14 is configured:
- for the mapping: to ray-trace image points of the at least one perfusion angiographic 2D X-ray image, to determine possible radiation paths based on the ray tracing; and to identify intersections of the determined possible radiation paths with the 3D foot-model; and
- for the identification: to evaluate portions of perfusionable material of the 3D foot-model based on the identified intersections; and to determine a transfer factor based on the evaluated portions; and
- for the modification: to spatially transfer values of the 2D X-ray image to the 3D foot-model based on the transfer factor, and to generate an enhanced 3D foot-model with transferred perfusion values; and
- for the provision: to present the enhanced 3D foot-model with the transferred perfusion values.

In an example, for weighting perfusion measurements, the data processor 14 is configured to: estimate pose parameters; identify at least one ray for an image point and calculate intersection points with the 3D foot-model; decompose the intersected points into bone and structure to identify contribution of tissue regions; and normalize portions to blood perfusion tissue.

In an example, the image data input is configured to receive a sequence of perfusion angiographic X-ray images of the region of interest of the subject's body.

The signal of the 2D image is transferred into the 3D model, e.g. by ray-tracing. A signal contributing part factor is determined by evaluating the model. The result is then used for a re-weighting of the signal value in the 2D image. The value (also referred to as figure) is taken and normalized to the part of the perfusionable sections of the foot.

The term "perfusionable" relates to material that is capable of showing blood perfusion, like tissue material, contrary to (compared to tissue) non-perfusionable material like bones. However, it must be noted that blood supply is of course also provided for bones. The blood supply is provided to and within bones; the relative fraction of blood in bones and e.g. parenchyma in bones can be quite different. In this sense, the normalization can take these differences into account.

In the providing step, the at least one X-ray image and the adapted spatial perfusion-related parameters are provided as enhanced perfusion X-ray image data.

In an example, the registration comprises an estimation of a position of a detector in relation to the subject. In another example, the registration comprises an estimation of the articulation parameters of the foot, e.g. flexion angle and contribution of anatomical modes.

The term "receiving at least one X-ray image of region of a foot of a subject" can also be referred to as "providing at least one X-ray image of the region of a foot of a subject". The at least one X-ray image is supplied to the further method steps.

The term "receiving a deformable 3D foot-model comprising spatial perfusion-related parameters" can also be referred to as "providing a deformable 3D foot-model comprising spatial perfusion-related parameters". The 3D foot-model is supplied to the further method steps.

The term "providing the at least one X-ray image and the adapted spatial perfusion-related parameters for computing perfusion analysis for at least a part of the foot of the subject" can also be referred to as "outputting the at least one X-ray image and the adapted spatial perfusion-related parameters for computing perfusion analysis for at least a part of the foot of the subject."

In an example, the term clinically relevant regions relates to e.g. angiosome, like feeding territories of the main vessels.

The assessment or evaluation in different regions allows to sum up signals in a targeted manner. The signal density of contrast agent is taken over time.

In an example, the 3D foot-model comprises a foot perfusion parcellation comprising regions for regional perfusion analysis.

In an example, the regions are meaningful regions for regional perfusion analysis.

In an example, the 3D foot-model comprises a parcellation structure into bone and tissue portions.

The parcellation structure is displaced and thus deformed with the adaption of the 3D foot-model. The parcellation structure can be provided as 2D map, or 2D data, which is then applied or transformed into the 3D world of the 3D foot-model. After the adaption in the 3D world, the information is transferred into 2D again, by mapping it into the 2D world of the at least one X-ray image used for perfusion analysis.

In an example, the parcellation is integrated into the 3D model. For example, overlapping regions are provided within the projection layer, in which the signal can be weighted.

The information is provided by a 3D model, but for a 2D application.

In an example of the foot-model, it is provided that perspective distortions and pose variability of angiographies are incorporated into the perfusion analysis of DSA sequences. The depth information being lost in the projective imaging is partially restored by a 3D foot-model which is matched to a given X-ray image. Such a model may incorporate structures being relevant for analyzing perfusion. These structures may include the skin, underlying parenchyma, all bones of the foot, a parcellation of the foot into clinically relevant regions, e.g. angiosome like feeding territories of the main vessels, and the main vessels.

In order to adapt the 3D foot-model to a given X-ray image, or X-ray images of an X-ray image sequence, the model is equipped with relevant motional and deformation degrees of freedom. For the analysis of foot angiographies, the incorporation of the flexion (plantar- and dorsi-flexion) is provided as it constitutes the motion mode inducing relatively large posture variation. The articulation of the 3D foot-model may also involve other modes such as inversion and eversion. Moreover, anatomical variability (e.g. of the shape of the bones or skin) may be incorporated, e.g. statically by means vertex-displacement vectors derived from a Procrustes analysis of a set of foot meshes stemming from different patients. Mathematically, it is assumed that the discussed degrees of freedom are described by a mapping of certain independent model-internal parameters, e.g. flexion angle, admixture of certain anatomical modes of the Procrustes analysis, to a 3D mesh, e.g. by adapting the vertex positions of a reference mesh.

In an example, the 3D foot-model is computed by segmenting the relevant structures (skin, bones,...) in a set of CT or MR images (corresponding to one or more patients), meshing these segmentations, registering to a fixed reference, analyzing the residual variability and modelling it, e.g. by mesh-blending, similarity transformations, or statistical analysis (e.g. Procrustes) and dimension reduction. The 3D images are required for the initial modelling of anatomical shape, shape variation and dynamics - they are not required for deployment of the later algorithm and may therefore be obtained from any other clinical discipline (e.g. orthopedics) independent from perfusion analysis or peripheral vascular disease.

In an example of the registration, various techniques are provided to register a given X-ray image (e.g. a fluoroscopy frame of an angiography) to a 3D model. Some of these methods are iterative and solve the optimization problem of finding the best pose, in which the 3D foot-model being projected to the X-ray detector plane fits best to features of the given X-ray image in some given metric. These image features may comprise detected intensity patterns, contours or landmarks, for example. In contrast to solutions that compute 3D pose information from optical camera images, the required registration module cannot rely on the assumption that these detected patterns or landmarks reside on the object's surface. This makes in particular standard triangulation approaches not useful. Corresponding features must then be derived from the 3D foot-model (e.g. by projecting landmarks of the model into the detector plane). In some examples, the feature-detection model for the X-ray images is trained on synthetic X-rays derived from the 3D model or underlying 3D image (e.g. CT).

Instead of solving such optimization problems, another example aims at a direct mapping of a 2D image to the pose parameters (or even a 3D mesh) using a forward model. Often these models operate directly on the 2D images, which requires labelled (2D-image, pose-parameters / 3D mesh)-pairs in the training phase. These data requirements may be prohibitively expensive to fulfil unless the 2D X-ray images are synthetically derived from 3D-images (e.g. CT voluminal) by projection with known, sampled camera parameters.

The "time density curve" relates to a curve showing the development of the contrast agent over time during the flow of the contrast agent though the particular point in the image.

The perfusion analysis is suitable, for example, for an outcome prediction and outcome evaluation. The perfusion can thus be compared for pre- and post-intervention stages.

The 3D model can be matched with the actual foot by deformation. Also, an adaption in size is possible. The model is adapted to the angiography.

In a further example of the method, the perfusion analysis comprises reporting local perfusion parameters extracted from a digital subtraction angiography sequence in the 3D foot-model.

In an example of the analysis, having estimated the projection pose and relevant model parameters for a given angiography, the corresponding DSA sequence can be analyzed both in the projection-plane and in the 3D foot-model.

According to an example of the invention, in a first possible sub-step of the analysis, normalization of extensive perfusion parameters by local tissue fraction is provided. The signal of a DSA image in a single pixel is formed by summation over the contrast-medium absorption (i.e. logarithm of the density) along the ray direction. Thereby, all extensive quantities, directly derived from a DSA image / sequence such as the time-density curve in a certain region, inherit this summation. As vessels and parenchyma being penetrated by the considered ray mainly contribute to the local signal, such extensive quantities are sensitive to the relative fraction of penetrated bones vs. parenchyma, which sets limits to the quantitative comparability of extensive quantities in different areas of the foot within the same DSA image / sequence. As the relative fraction of penetrated bones is also camera-pose dependent, this sensitivity impacts the quantitative comparability of DSA images / sequence (e.g. pre- and post-intervention angiographies).

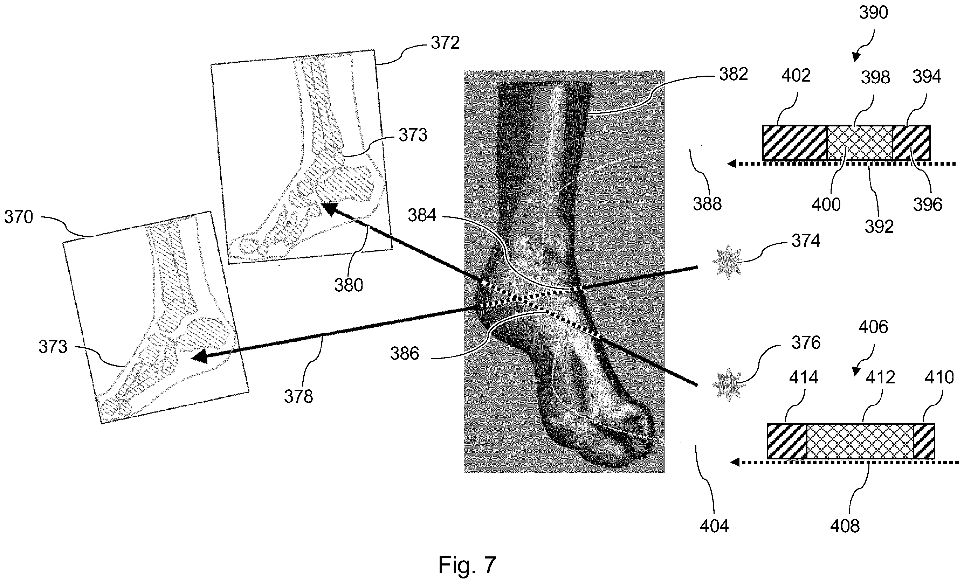

This mitigates this lack of quantitative comparability between different regions or (slight) pose variations by ray tracing, which is illustrated in Figs. 7a and 7b and Fig. 8. Having estimated the camera-pose parameters as well as the model-internal parameters, the 3D foot-model is articulated / deformed accordingly. For each pixel of interest in the DSA image / sequence, the corresponding ray of the X-ray source is traced and the intersection points with the foot-model outer surface are determined. Thereafter, the penetration path-length L is measured. Similarly, the total penetration path-length LB of bones intersecting this ray are calculated. The local fraction of penetrated bones is finally compensated by multiplying the extensive quantity with the factor (1 - LB / L), which is position and pose dependent. In a more refined normalization, a weighting factor may be created by estimating the typical perfusion intensity of parenchyma, IP, and of bones, IB, and weighting them with the local fraction of penetrated bones and parenchyma to result in the overall weighting factor IP (1 - LB / L) + IB LB / L.For more efficient computations, this compensation factor may also be calculated for a small patch of pixels in the DSA image / sequence by intersecting the 3D foot-model with a cone formed by the rays of the outer pixels of this patch.

This standardization procedure applies to extensive quantities, i.e. quantities whose value increases proportionally to the size of region on which they are evaluated / accumulated. The normalization is not applied to intensive quantities such as timespans, e.g. time of arrival.

In a second possible sub-step of the analysis, perfusion analysis in pose-adapted regions is provided. While angiographies give a comprehensive view on the perfusion in the whole foot, information compression is desirable for presenting the data to a clinician, comparing perfusion (e.g. pre- vs. post-intervention), deriving scores for e.g. intervention-outcome assessment and inter-patient comparison. Compressing the spatial information in angiographies can be realized by assessing the perfusion in well-defined perfusion regions, e.g. by summing up the DSA signal in these regions and presenting it as time-density curves (or presenting characteristic parameters of these curves). Such perfusion regions cannot be properly defined in the projection image alone, since, given such a definition for a given X-ray, a simple transfer to another X-ray image (e.g. by image-to-image registration) will not correspond to the same volume in the foot if the camera poses differ. A pure 2D definition of perfusion regions does not ensure anatomical correspondence if transferred to another X-ray. The following provides to mitigate the lack of anatomical correspondence (see Figs. 7a and 7b for an illustration).

Having estimated the camera-pose and model-internal parameters, a given parcellation of the 3D foot-model into meaningful perfusion regions, e.g. motivated by angiosome like feeding territories of the main vessels, can be projected into the angiography. Having normalized the DSA signal according to the example above, the contrast density can then be summed up in the projected perfusion regions. Here, care is required for treating the overlap region of two neighboring perfusion regions (see Figs. 7a and 7b) since the measured contrast density must be properly distributed among the neighboring perfusion regions.

A way of weighting the measured contrast density consists in ray-tracing (see above) and taking the ratio of the penetration-path lengths in the tissue of the neighboring perfusion regions as a weight factor. This construction assumes a spatial homogeneity of perfusion in the tissue intersected by the ray, which is compromised by larger vessels intersecting the perfusion regions. Thereby, this approach becomes valuable if applied to the microvascular perfusion signal, which can be automatically separated from the macrovascular perfusion in DSA images / sequences.

The contribution of larger vessels to overlapping perfusion region can be properly weighted by dedicated approaches:
The major vessels can be segmented in the DSA image / sequence and labelled. Using prior knowledge such as a mean vessel tree in the 3D foot-model, the detected major vessels can be matched to their 3D correspondence such that the signal of the major vessels can uniquely assigned to one of the perfusion regions only.

Given the camera pose and model-internal parameters as well as a segmentation of the major vessels in the angiography, a 3D vessel tree may be deformed to best match to the segmentation. This adapted 3D vessel tree may either be used for assigning vessels in the projective plane to a certain perfusion region (see above) or for customizing the perfusion region boundaries in the 3D model such that each region is only fed by a single major vessel.

Further, the overlap area of neighboring perfusion regions may also be used for constructing a confidence score or error bars to the time-density curves. These error bars may reflect the relative portion of the overlap region to the full region and account for the remaining uncertainty which stems from the lack of information about the distribution of microvascular perfusion in projection direction.

The 3D foot-model is used to identify radiation paths through the object to normalize the detected signals of the 2D X-ray image.

Starting from the 2D image, ray tracing is provided for each pixel: Which X-ray radiation path leads to the respective pixel? Where does the radiation path pass through the 3D foot-model? Instead of a radiation path, a pyramid is provided, i.e. a pyramid space is spanned, starting from the image point, to reflect the possible origin of the X-ray radiation. In an example, a truncated and pyramid-like shape of radiation paths is provided for each patch of image points. This is also called ray-tracing. The patch can refer to a size of one or several pixels in the 2D image.

The overlap with the volume of the 3D foot-model is determined. A layer model can be used here. Since the 3D foot-model provides a structural differentiation into areas or portions in which perfusion can be excluded and such areas or portions in which perfusion is to be expected, the overlap of the pyramid-like shape of radiation paths with the structure of the 3D foot-model allows a determination of the number of portions in which perfusion is to be expected for the particular image value.

The signal (of the 2D patch) is split over the parts suitable for perfusion. The signal is thus smeared to this area. The resulting value thus provides an enhanced value, since the otherwise missing depth information is considered at least in its basic aspect of how much perfusionable tissue was actually passed or penetrated.

In an example, as a sort of preparation step, it is provided the attempt of arranging, or pre-positioning the 2D image and the 3D model in a similar spatial rotation before they are actually registered to provide improved matching and thus improved ray-tracing.

In other words, it is provided to normalize the image value.

The material, i.e. part of the foot, that usually shows perfusion, like vessels and tissue, can also be referred to as perfusionable material. The material, i.e. part of the foot, that typically shows less perfusion, like bones, can also be referred to as non-perfusionable material.

The signal from the angiography is thus taken, i.e. mapped, into 3D for modification.

In an example, the 3D foot-model is enriched with the signals from the 2D image to provide a 3D perfusion foot image.

For example, a first 3D perfusion foot image is computed based on pretreatment 2D image data of the subject, resulting in a 3D perfusion foot pre-image. The 3D perfusion foot pre-image can also be referred to as 3D perfusion pre-model. A second 3D perfusion foot image is computed based on post-treatment 2D image data of the subject, resulting in a 3D perfusion foot post-image. The 3D perfusion foot post-image can also be referred to as 3D perfusion post-model. The 3D perfusion pre-model and the 3D perfusion post-model can be registered to each other to allow a better comparison between the state before the treatment and after the treatment. In an option, the user can toggle between the two 3D perfusion models to visualize the result in 3D.

Briefly said, a normalization of the 2D image information is provided, by registering the 2D X-ray image signals with a 3D model. In a first option, the normalization is used for visualization in (2D) angiograms. The pose is estimated for the 2D normalization. In a second option, the normalization is used for reporting in the (3D) model context.

The signal is enriched by the spatial allocation to the model. The signal is thus moved to a next level.

In a further option, e.g. a third possible sub-step of the analysis, reporting angiography-based perfusion measurements in 3D foot-model is provided. Unravelling the sub-volume of a 3D object contributing to the local signal in a projection images is provided for a thorough interpretation. Applying this reasoning to a new image for comparison with a previous one (e.g. pre- vs. post-intervention, different patients) may be cumbersome and may require quite some mental work.

These issues can be tackled by mapping information acquired in the angiography into the 3D foot-model. If such a mapping is established for other modalities, their measurement can directly be compared to the angiography measurements in 3D space. Moreover, such a reporting of angiography-based measurement allows for directly comparing different DSA images / sequences in 3D, taking camera-pose and articulation (e.g. flexion) variations into account.

Such a 2D-to-3D mapping for reporting of angiographies can be realized as follows (see Fig. 8): Having estimated the camera-pose and model-internal parameters, the rays of all pixels are traced. If the quantity to be reported is extensive, the normalization scheme of the first possible sub-step of the analysis above (normalization of extensive perfusion parameters by local tissue fraction) can be applied first. Thereafter, the traced rays are thickened up to small rods. Rods of rays stemming from neighboring pixels in the angiography should not intersect each other. This can be realized by choosing cylinders of sufficiently small radius as rods. An even better construction may involve tracing the four rays ending at the vertices of the pixel under investigation and using the pyramid formed by the pixel area, these four rays and the focal point as a rod. The latter construction results in a space-filling parcellation of the 3D foot-model into rods (at least with respect to the field-of-view of the given angiography). For each pixel in the angiography (sequence), the corresponding (potentially normalized) perfusion parameter is assigned to all positions in the 3D foot-model where the corresponding rod overlaps with tissue. This mapping procedure may also be applied to small patches of the angiography (instead of being pixel-based), where the pyramid-rod constructions can directly be applied to the corners of the patch.

In this mapping, local information obtained from the angiography is smeared out along the ray direction. Thereby, the contribution of major vessels to the local DSA signal would also be distributed across the corresponding rod, which may lead to misinterpretations.

Using the micro- vs. macrovascular separation of the local DSA signal and prior knowledge in the 3D foot-model (an average vessel tree or an adaption of a vessel tree to best match the segmented vessels in the angiography), one can assign the microvascular properties to the parenchyma and the macrovascular properties to the vessel tree in the 3D foot-model.

This reporting of angiography data results in an adapted 3D model (e.g. the flexion degree is adjusted to match best the angiography). In order to better compare two different angiographies (pre- vs. post-intervention, different patients), these foot-model adaptions can be undone by e.g. mesh-based registrations or morphing the adapted foot-models to a standard configuration of the model-internal parameters (e.g. mean anatomical shape, reference flexion angle etc.).

According to an example of the method, for the mapping, it is provided the steps of:
- ray-tracing image points of the at least one perfusion angiographic 2D X-ray image;
- determining possible radiation paths based on the ray tracing; and
- identifying intersections of the determined possible radiation paths with the 3D foot-model.

Further, for the identification, it is provided the steps of:
- evaluating portions of perfusionable material of the 3D foot-model based on the identified intersections; and
- determining a transfer factor based on the evaluated portions.

Still further, for the modification, it is provided the steps of:
- spatially transferring values of the 2D X-ray image to the 3D foot-model based on the transfer factor and generating an enhanced 3D foot-model with transferred perfusion values.

Furthermore, for the provision, it is provided the step of:
- presenting the enhanced 3D foot-model with the transferred perfusion values.

In a further example of the method, for weighting perfusion measurements, further steps are provided:
- estimating pose parameters;
- identifying at least one ray for an image point and calculating intersection points with the 3D foot-model;
- decomposing the intersected points into bone and structure to identify contribution of tissue regions; and
- normalizing portions to blood perfusion tissue.

The amount of the tissue contributing to the signal is thus determined. A respective ratio is provided by determining the length of the radiation ray through the foot and the length through the tissue parts that can be perfused by blood.

Alternatively, starting from the image, a pyramid or cone-like structure is identified representing the respective image radiation used for the image, and it is determined how the pyramid cuts the 3D foot-model.

The data, i.e. signals, are transferred from 2D into the 3D model. Features seen in 2D are transferred into the 3D world of the model. The model allows to transfer this to the actually perfused tissue. This can be used for reporting

In a further example of the method, the 3D foot-model is an articulated model of the foot that can be adapted to a given bone constellation of the foot.

As an example, the model is provided with a predetermined degree of plantar-flexion or dorsi-flexion.

In an example, the 3D foot-model statistically describes anatomical variability.

In an example of the method, the adapting of the 3D foot-model is provided by adapting a model bone structure to a given bone constellation in the at least one X-ray image.

In a further example of the method, it is provided a further step of: displaying the results of the analysis and a comparison of perfusion parameters of different digital subtraction angiography sequences.

As an example, pre- / post-intervention angiographies are shown.

In an example of the visualization, the results of the analysis units can be displayed to the user in various ways and are described in the sequence of the above analysis aspects:
In a first possible sub-step of the visualization, visualization of tissue-fraction normalized extensive perfusion parameters is provided. The result of the normalization step above can be visualized in form of time-density curves corresponding to a manually or automatically selected regions. Alternatively, the normalized local perfusion parameter can be presented as an overlay on the angiography to the clinician, where a toggle user interface for switching between overlaying the "raw" and tissue-fraction normalized perfusion parameters would be useful for trust-building in this local normalization.

In a second possible sub-step of the visualization, visualization of analysis in pose-adapted perfusion regions is provided. This analysis step aims at an anatomically well-defined regional measurement of perfusion properties, which can be presented in form of a time-density curve for a given region and a visualization of deduced parameters (e.g. peak-height, peak-time). In order to connect these aggregated pieces of information to the anatomy, such a visualization can be accompanied by a 3D rendering of the articulated foot-model and its parcellation. The rendering camera can be adapted to the estimated pose, and a projection of the parcellation into the angiography may be presented in form of e.g. colored overlays. Clicking on a certain parcellation overlay on the angiography may trigger a selection of this perfusion region and a corresponding update of the time-density curve plot.

In a third possible sub-step of the visualization, reporting of perfusion parameters in 3D model is provided. Having mapped the perfusion properties measured in the angiography into the 3D foot-model in a space-filling manner, the result can be presented in form of a 3D rendering to the clinician, where the values of the perfusion parameter (e.g. tissue-normalized time-density peak) may be color-encoded. Besides the 3D rendering with trackback navigation, also orthogonal cuts through the model may be presented (e.g. a cut parallel to the sagittal plane). The 2D angiography may furthermore be integrated into the 3D plot as a texture of a plane being orientated and positioned at the location of the actual X-ray detector. Moreover, the projection directions of a given field-of-view of the 3D foot-model may be displayed to the user on demand in form of few arrows pointing from a location in the foot-model into the direction of the detector-pixel onto which this location is projected. In order to compare the perfusion of two angiographies (e.g. different patients or pre- and post-intervention), the graphical user interface may be equipped with a button which upon being clicked triggers the registration of the two adapted foot-models. Thereafter, the user may toggle between the measured perfusion values of the two angiographies while keeping e.g. the 3D rendering camera fixed.

The examples described herein thus support both intra-patient (e.g. before and after an intervention) and inter-patient comparisons. As an advantage, the sensitivity on the pose (patient and detector positioning) and the inhomogeneity of the penetrated material is addressed, having components that contribute to the perfusion signal (parenchyma, vessels) and components that do not or significantly less (bones), as being key aspects for such quantitative comparisons.

Thus, prior knowledge is utilized in form of a general 3D model of the limb in order to compensate the loss of depth information in the perfusion signal to a large extent. By registering an adaptable 3D model to individual 2D angiography sequences (estimating pose, limb-posture and model-internal parameters), volumetric perfusion regions can be mapped from the 3D model into this patient specific 2D domain, and the local perfusion signal can be normalized by the local material-component fraction actually contributing to it.

In an example, the device for peripheral perfusion measurement comprises an image data input, a data processor and an output interface. The image data input is configured to: receive at least one perfusion angiographic 2D X-ray image of a region of interest of a subject's foot; and receive a 3D foot-model comprising spatial perfusion-related parameters. The data processor is configured to: register the 3D foot-model with the foot in the at least one perfusion angiographic X-ray image; establish a spatial correspondence between positions in the at least one perfusion angiographic X-ray image and the related regions in the 3D foot-model; use this correspondence in order to map spatial perfusion-related parameters from the 3D model into the at least one perfusion angiographic 2D X-ray image and modify the image signal based on these mapped spatial perfusion-related parameters or in order to map the image signal into the 3D foot-model. The output interface is configured to provide the at least one modified image signal.

In an example, for improved perfusion analysis, the model carries a standard or customized, anatomically reasonable definition of 3D perfusion regions, such as angiosome-like feeding territories of the main vessels in the foot. Once the pose of the model is known with respect to the current 2D angiography, it can be used as a forward model to project these region definitions into the current 2D domain. This gives rise to maximally comparable region outlines across different angiographies. It also gives rise to natural ways for normalizing the intensity sum for each region and makes knowledge about the extent of comparability readily available. The forward projection provides information about the overlap of the 3D regions in their 2D projection and can approximate the proportion of parenchyma and bone that is penetrated by the X-rays in projection direction. The model therefore compensates the missing depth information in the projection by prior knowledge about the anatomy of a foot on the one hand, but also provides a tool for reporting the perfusion measures in a 3D reference using the backward path.

In the following, for some of the aspects above, further figures are provided for explanation and also for illustration purposes.

Fig. 4 shows an illustration 300 of the 3D model of the foot 302 in two different flexions and overlayed, i.e. an illustration on how the 3D model can be adapted to different flexions. The foot of the model is indicated with basic structures, like bone silhouettes. A first flexions 304 and a second flexions 306 are shown. The difference in the flexions can best be seen in the region of the distal ends, i.e. the toes.

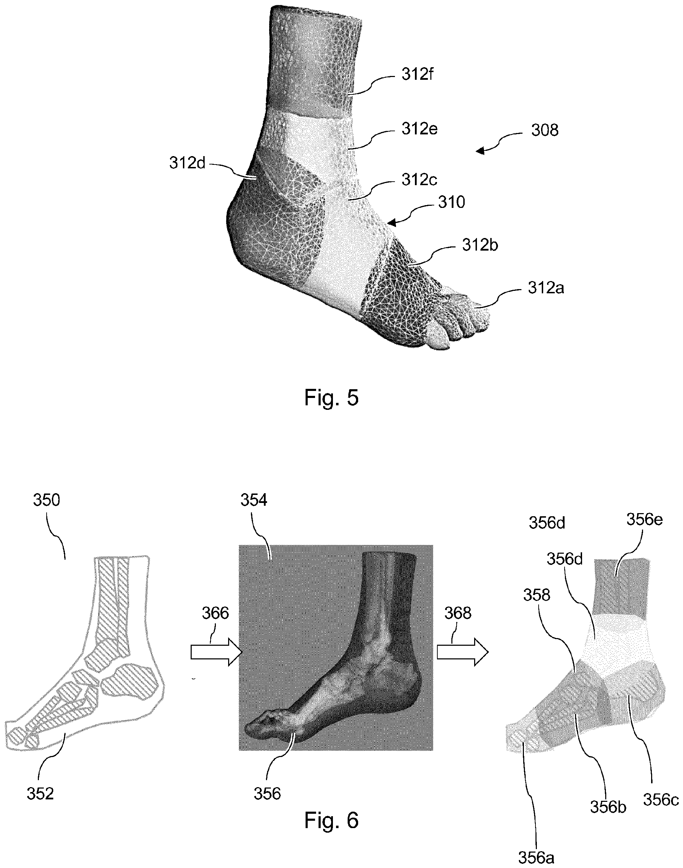

Fig. 5 shows a 3D foot-model 308, with an optional foot parcellation 310. The 3D foot-model 308 can be articulated. Fig. 5 shows the exemplary foot-model 308 comprising a skin sub-mesh, sub-meshes for the individual bones (not further shown) as well as the parcellation 310 of the foot into perfusion regions, like a first region 312a relating to the toes, a second region 312b, a third region 312c, a fourth region 312d, a fifth region 312e and a sixth region 312f. The articulation of this model is illustrated by overlaying the model configuration for two flexion angles in Fig. 4. The exemplary parcellation into the perfusion regions is depicted in Fig. 5.

Fig. 6 shows a row of stages for perfusion analysis, with an input X-ray image (left), a 3D foot-model for registration (middle) and overlaid anatomical regions like a parcellation map (right).

Fig. 6 shows an X-ray image 350 in the left part with an indicated foot of a subject in a first pose 352. In an example, the image is a pre-interventional image. In another example, the image is a post-interventional image. It is also provided to present a pre-interventional overlaid image (as shown in the right part) next to a respective post-interventional image for comparison. In the middle part of Fig. 6, a 3D foot-model 354 for registration is indicated in a matching articulation, i.e. a matching first pose 356. In the right part of Fig. 6, anatomical regions like a parcellation map 358, e.g. based on the 3D foot-model 354 in the first pose 356 are overlaid to the pre-intervention X-ray image 350. In the right part of Fig. 6, also the anatomical regions like the parcellation map 356, e.g. based on the 3D foot-model 354 in the second pose 362 are overlaid to the post-intervention X-ray image 360. The parcellation map 356 in Fig. 6 is each indicated with a plurality of subregions 356a, 356b, 356c, 356d and 356e.

A first arrow 366 between the X-ray image on the left and the 3D foot-model in the middle indicates a 2D-3D registration (Fig. 6). A second arrow 368 between the 3D foot-model in the middle and the projection on the right indicates a projection of the 3D model in a 2D image plane (Fig. 6).

In an example (not shown), it is provided to show an exemplary illustration of the pose-adaption of perfusion regions for two different input images acquired in different poses: First, the input X-ray image is registered to a 3D foot-model. Using the estimated pose parameters, perfusion regions which are defined in the 3D model are projected into the X-ray image. These pose-adapted perfusion regions can then be used for evaluating the perfusion tissue density curve in anatomically corresponding regions taking also the overlap of the neighboring perfusion regions in the X-ray image into account. Pose-adaption of the perfusion regions enables a quantitative regional perfusion comparison of a pre- and post-intervention DSA acquired in different poses.

Fig. 7 schematically illustrates a concept of an example for peripheral perfusion measurement with mapping perfusion parameters into the 3D foot-model for decomposing the penetrated material into tissue and bone and normalizing the X-ray image signal.

Fig. 7 shows a first X-ray image 370 and a second X-ray image 372 in the left part, both X-ray images 370, 372 showing the same foot 373, but from different orientations, as indicated with a first X-ray source position 374 and a second X-ray source position 376. Ray tracing is applied using estimated pose parameters. A first line 378 indicates a respective first path of radiation first X-ray source position 374. A second line 380 indicates a respective second path of radiation from the second X-ray source position 376. Further, in the middle part of Fig. 8, a presentation of a 3D foot-model 382 is shown. The 3D foot-model 382 is used for identification of foot-model ray intersections. A first intersection part 384 of the first line 378 with the 3D foot-model 382 in a spatial relation, i.e. in 3D, is indicated with a dotted pattern. A second intersection part 386 of the second line 380 with the 3D foot-model 382 in a spatial relation, i.e. in 3D, is also indicated with a dotted pattern.

As indicated with a first dotted arrow 388, a first decomposition 390 is provided for the ray penetrating the 3D foot-model 382 with a first ray direction 392. The first decomposition 390 shows a first portion 394 relating to a first category of material, e.g. tissue structure, indicated with a first pattern 396, a second portion 398 relating to a second category of material, e.g. bone structure, indicated with a second pattern 400, and a third portion 402 relating to the first category of material. As indicated with a second dotted arrow 404, a second decomposition 406 is provided for the ray penetrating the 3D foot-model 382 with a second ray direction 408. The second decomposition 406 shows a first portion 410 relating to the first category of material, a second portion 412 relating to the second category of material, and a third portion 414 relating to the first category of material. This information can then be used for normalization of an X-ray signal. For example, the second ray penetrates more bone structure than the first ray. The signals can then be adapted accordingly, i.e. normalized at least to a first degree.

Fig. 8 thus shows a mapping of perfusion parameters into the 3D foot-model for reporting and comparison of pre- and post-intervention images. Given an X-ray image, and corresponding to a DSA sequence, the pose parameters are estimated. For each pixel in the X-ray radiation image data, the corresponding ray can thereby be identified. Having calculated the intersection points with the 3D foot-model, the penetrated material can be decomposed into tissue and bone. The measured perfusion parameter of the DSA at this pixel is then mapped into the 3D model as follows: The same parameter value is assigned to all positions within the intersection of tissue with a small rod around the considered ray. Here, intrinsic parameters, e.g. time of arrival, are assigned to these positions without post-processing, while extrinsic parameters, e.g. temporal mean contrast density, are normalized by the tissue-penetration depth.

In an example to be claimed, a processor for peripheral perfusion measurement is provided. The processor is configured to perform the steps of one of the method examples.

In an example to be claimed, a computer implemented method enabling a processor to carry out the method of one of the examples above is provided.

In an example to be claimed, a computer program or program element for controlling an apparatus according to one of the examples above is provided, which program or program element, when being executed by a processing unit, is adapted to perform the method steps of one of the method examples above.

In an example to be claimed, a computer program enabling a processor to carry out the method of one of the method claims is provided.

The term "subject" may also be referred to as individual. The "subject" may further also be referred to as patient, although it is noted that this term does not indicate whether any illness or disease is actually present with the subject.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated, and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for peripheral perfusion measurement, comprising:
- an image data input (12);
- a data processor (14); and
- an output interface (16);
wherein the image data input is configured to: receive at least one perfusion angiographic 2D X-ray image of a region of interest of a subject's foot; and receive a 3D foot-model comprising spatial perfusion-related parameters;
wherein the data processor is configured to: register the 3D foot-model with the foot in the at least one perfusion angiographic X-ray image; wherein the registering comprises a pose-estimation of the foot in the 2D X-ray image; map information between the 2D image and the 3D foot-model based on the pose-estimation; identify image processing modification instructions based on the mapped information; and modify the at least one image signal based on the image processing modification instructions; and
wherein the output interface is configured to: provide the at least one modified image signal.

2. Device according to claim 1,
wherein, for the mapping, the data processor is configured to map perfusion regions from the 3D foot-model into the 2D X-ray image and to project the perfusion regions in 2D;
wherein, for the identification of the at least one image processing modification instruction, the data processor is configured to sum up a perfusion signal in each of the projected perfusion regions, wherein the data processor is configured to adapt the perfusion regions to the estimated pose; and
wherein, for the modification, the data processor is configured to generate a set of time-density curves corresponding to these adapted perfusion regions.

3. Device according to claim 1 or 2,
wherein, for the mapping, the data processor is configured to perform a ray tracing;
wherein, for the identification of the at least one image processing modification instruction, the data processor is configured to derive a modification factor from the 3D model;
wherein, for the modification, the data processor is configured to apply the derived modification factor to the at least one signal of the 2D X-ray image; and
wherein, for the provision of the at least one modified image signal, the data processor is configured to report the modified image signal in the image or providing quantities derived from the at least one modified image signal.

4. Device according to claim 1, 2 or 3,
wherein, for the mapping, the data processor is configured to perform ray tracing of a patch of at least one pixel of the 2D X-ray image and to map a respective image signal to a perfused region in the 3D model that contributed to the patch in the 2D X-ray image;
wherein, for the identification of the at least one image processing modification instruction, the data processor is configured to store the perfusion signal of the 2D X-ray image or derived quantities in the 3D model; and
wherein, for the modification, the data processor is configured to generate a reporting via a 3D rendering of the 3D model with the stored perfusion signal.

5. Device according to one of the preceding claims,
wherein the 3D foot-model is an articulated model of the foot that can be adapted to a given bone constellation of the foot.

6. Device according to one of the preceding claims,
wherein the perfusion-related parameters comprise perfusion analysis relevant three-dimensional structures comprising at least one of the group of: the skin, underlying parenchyma, bones of the foot, parcellation of the foot into clinically relevant regions, and the main vessels.

7. Device according to one of the preceding claims,
wherein the data processor is configured to calculate a regional perfusion analysis of a digital subtraction angiography sequence as perfusion analysis, taking distortions of the projective imaging for the given pose into account.

8. Device according to one of the preceding claims,
wherein the data processor is configured:
- for the mapping: to ray-trace image points of the at least one perfusion angiographic 2D X-ray image, to determine possible radiation paths based on the ray tracing; and to identify intersections of the determined possible radiation paths with the 3D foot-model; and
- for the identification: to evaluate portions of perfusionable material of the 3D foot-model based on the identified intersections; and to determine a transfer factor based on the evaluated portions; and
- for the modification: to spatially transfer values of the 2D X-ray image to the 3D foot-model based on the transfer factor, and to generate an enhanced 3D foot-model with transferred perfusion values; and
- for the provision: to present the enhanced 3D foot-model with the transferred perfusion values.

9. Device according to one of the preceding claims, wherein a visualization unit is provided comprising a graphical user interface configured to present the results of the data processor via the output interface and to compare perfusion parameters of different digital subtraction angiography sequences.

10. A system (100) for peripheral perfusion measurement, the system comprising:
- an X-ray imaging device (102);
- a display device (104); and
- a device (10) for peripheral perfusion measurement according to one of the preceding claims;
wherein the X-ray imaging device is configured to provide at least one perfusion angiographic X-ray image of a region of interest of a subject's body; and
wherein the display device is configured to display the at least one modified image signal.

11. A method (200) for peripheral perfusion measurement, comprising the following steps:
- receiving (202) at least one perfusion angiographic 2D X-ray image of a region of interest of a subject's foot; and receiving (204) a 3D foot-model comprising spatial perfusion-related parameters;
- registering (206) the 3D foot-model with the foot in the at least one perfusion angiographic X-ray image; wherein the registering comprises a pose-estimation of the foot in the 2D X-ray image;
- mapping (208) information between the 2D image and the 3D foot-model based on the pose-estimation;
- identifying (210) image processing modification instructions based on the mapped information;
- modifying (212) the at least one image signal based on the image processing modification instructions; and
- providing (214) the at least one modified image signal.

12. Method according to claim 11,
wherein the mapping comprises mapping (218) perfusion regions from the 3D foot-model into the 2D X-ray image and projecting (220) the perfusion regions in 2D;
wherein the identifying of the at least one image processing modification instruction comprises summing up (222) a perfusion signal in each of the projected perfusion regions, wherein the perfusion regions are adapted to the estimated pose; and
wherein the modifying comprises generating (224) a set of time-density curves corresponding to these adapted perfusion regions.

13. Method according to claim 11 or 12,
wherein the mapping comprises a ray tracing (226);
wherein the identifying of the at least one image processing modification instruction comprises a derivation (228) of modification factor from the 3D model;
wherein the modifying comprises applying (230) the derived modification factor to the at least one signal of the 2D X-ray image; and
wherein the providing the at least one modified image signal comprises reporting (232) the modified image signal in the image or providing (234) quantities derived from the at least one modified image signal.

14. A computer implemented method enabling a processor to carry out the method of one of the claims 11 to 13.

15. A computer readable medium having stored the program element of claim 14.
